# EUROPEAN PATENT APPLICATION

(11) **EP 2 373 108 A1**
(43) Date of publication of application: **05.10.2011**
(21) Application number: 09834618.2
(22) Date of filing: 28.10.2009
(51) Int. Cl.: H04W 72/08

(54) **RADIO COMMUNICATION SYSTEM, BASE STATION DEVICE, AND CHANNEL ALLOCATION METHOD**

(30) Priority: 26.12.2008 JP 2008332983
(71) Applicant: NEC Corporation, Minato-ku Tokyo 108-8001 (JP)
(72) Inventor: ONO, Tomohiro, Tokyo 108-8001 (JP)
(74) Representative: Glawe, Delfs, Moll
(86) International application number: PCT/JP2009/068470
(87) International publication number: WO 2010/073814

(57) **Abstract**

One region of a plurality of regions into which channels are divided over the radio link as a main region is designated for each of groups into which the cells of the plurality of base stations are divided. When a mobile terminal receives a signal from a second base station other than a first base station to which the own mobile terminal is connected, the mobile terminal notifies the first base station of adjacent status information that represents a group to which a cell of the second base station belongs. The first base station allocates a channel that belongs to a region other than the main region of the group represented by the adjacent status information that the mobile terminal notifies to the first base station.

## Description

### TECHNICAL FIELD

The present invention relates to radio communication systems that cover communication areas using a plurality of cells, in particular to application techniques for frequency bandwidths of the radio communication systems.

### BACKGROUND ART

In radio communication systems that cover communication areas using a plurality of cells, such as mobile telephone systems and WiMAX (Worldwide Interoperability for Microwave Access), since cells are designed to satisfactorily hand over, there are areas where they overlap.

If a terminal is present in such an area, the terminal receives radio waves that are transmitted from two or more base stations. Thus, the terminal can be handed over between base stations and communication can remain connected even if the terminal moves therebetween.

However, an uplink radio wave from a terminal present where a plurality of cells overlaps may reach not only the connected base station, but also other base stations. Such a radio wave becomes an interference wave that interferes with other base stations and causes the signal throughput of a desired wave to deteriorate. As a result, the total throughput of the radio communication system deteriorates.

To alleviate the influence of such interference, a technique that divides a frequency bandwidth allocated to the system into a plurality of regions and repeatedly allocates them to individual cells in a predetermined reuse pattern is known (for example, refer to JP11-355840A (hereinafter referred to as "Literature 1")).

In addition, WiMAX involves a technique called segmentation that divides a cell into a plurality of segments and allocates different frequency regions to the individual segments.

Moreover, a technique that divides a frequency bandwidth into a plurality of groups and preferentially allocates one of the groups as a priority group to each base station is known (refer to JP07-038953A (hereinafter referred to as "literature 2")).

### SUMMARY OF THE INVENTION

### PROBLEM TO BE SOLVED BY THE INVENTION

The technique presented in Literature 1 and the segmentation of WiMAX fully divide a frequency bandwidth allocated to the system on the basis of each cell. Thus, although such techniques alleviate interference, the frequency bandwidth of the system cannot be effectively used and the throughput of the system may not be satisfactorily accomplished.

Moreover, in the technique presented in Literature 2, since channels of preferential groups are allocated regardless of whether or not interference takes place, the technique may not effectively alleviate interference.

An object of the present invention is to provide techniques that can effectively use a frequency bandwidth of the system and effectively alleviate interference.

### MEANS THAT SOLVE THE PROBLEM

To accomplish the foregoing object, a radio communication system of the present invention has a plurality of base stations that respectively form cells over a radio link, and a mobile terminal that is connected to and communicates with said base stations through the radio link,
wherein one region of a plurality of regions into which channels are divided over the radio link is designated as a main region for each of groups into which the cells of said plurality of base stations are divided,
wherein when said mobile terminal receives a signal from a second base station other than a first base station to which said mobile terminal is connected, said mobile terminal notifies said first base station of adjacent status information that represents a group to which a cell of the second base station belongs, and
wherein said first base station allocates a channel that belongs to a region other than the main region of the group represented by said adjacent status information concerning which said mobile terminal notifies said first base station.

A base station device of the present invention, comprising:
status acquisition means that acquires adjacent status information that represents a group to which a cell of a second base station, other than a first base station of base stations that transmit signals that a mobile terminal receives, belongs from the mobile terminal connected to the own base station device, the first base station being connected to the mobile terminal; and
channel allocation means that determines a main region of a group represented by said adjacent status information acquired by said status acquisition means based on information concerning which one of a plurality of regions into which channels are divided over a radio link is correlated with a main region for each of a plurality of groups into which cells of a plurality of base stations are divided and allocates a channel that belongs to a region other than the main region to said mobile terminal.

A channel allocation method of the present invention is a channel allocation method in a radio communication system having a plurality of base stations that respectively form cells over a radio link, and a mobile terminal that is connected to and communicates with said base stations through the radio link, comprising:
designating one region from among a plurality of regions into which channels are divided over the radio link as a main region for each of groups into which the cells of said plurality of base stations are divided;
when said mobile terminal receives a signal from a second base station other than a first base station to which said mobile terminal is connected, causing said mobile terminal to notify said first base station of adjacent status information that represents a group to which a cell of the second base station belongs; and
causing said first base station to allocate a channel that belongs to a region other than the main region of the group represented by said adjacent status information received from said mobile terminal.

### BRIEF DESCRIPTION OF DRAWINGS

[Fig. 1] is a block diagram showing a structure of a radio communication system according to a first embodiment.
[Fig. 2] is a schematic diagram showing exemplary regional divisions of a frequency bandwidth according to the first embodiment.
[Fig. 3] is a sequence chart showing an operation of a radio communication system when allocating channels according to the first embodiment.
[Fig. 4] is a block diagram showing a structure with respect to a channel allocation of mobile terminal 12 according to the first embodiment.
[Fig. 5] is a block diagram showing a structure with respect to a channel allocation of base station 11 that is a connected base station according to the first embodiment.
[Fig. 6] is a schematic diagram showing a structure of a communication network including a WiMAX system.
[Fig. 7] is a schematic diagram showing an exemplary structure of the WiMAX system and locations of mobile terminals according to a second embodiment.
[Fig. 8] is a schematic diagram showing exemplary channel allocations for the mobile terminals in the condition shown in Fig. 7.
[Fig. 9] is a schematic diagram showing an exemplary operation when changing a channel according to the second embodiment.

### EXAMPLARY EMBODIMENTS FOR CARRYING OUT THE INVENTION

With reference to the drawings, embodiments of the present invention will be described in detail.

### (First embodiment)

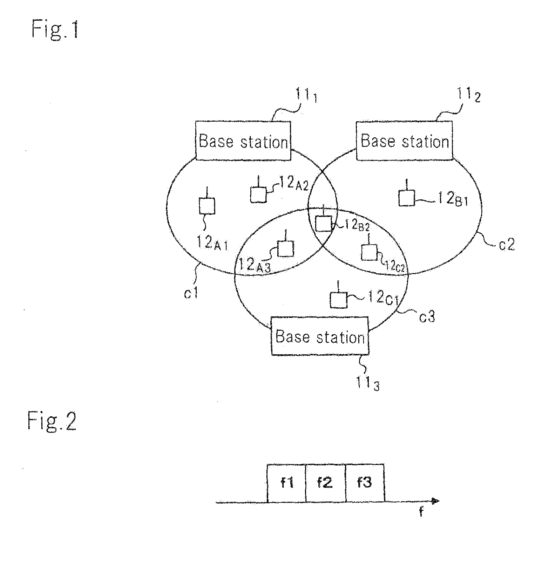

Fig. 1 is a block diagram showing a structure of a radio communication system according to a first embodiment. Referring to Fig. 1, the radio communication system has base stations 11₁ to 11₃ and mobile terminals 12_{A1} to 12_{A3}, 12_{B1}, 12_{B2}, 12_{C1}, and 12_{C2}.

Base station 11 forms a cell over a radio link and is connected to mobile terminal 12 that is present in a cell that the own base station forms. Base station 11₁ forms cell c1; base station 11₂ forms cell c2; and base station 11₃ forms cell c3. Although Fig. 1 shows three base stations 11₁ to 11₃, generally more base stations 11 are located and a plurality of cells two-dimensionally cover the communication area. In addition, to satisfactorily accomplish a handover, cells c1 to c3 overlap at their boundaries.

A plurality of cells, that a plurality of base stations 11 form, are divided into a plurality of groups. In this example, it is assumed that cells are divided into three groups. In addition, it is assumed that cell c1 belongs to group G1; cell c2 belongs to group G2; and cell c3 belongs to group G3.

In addition, a frequency bandwidth allocated to the radio communication system is divided into a plurality of regions. Fig. 2 is a schematic diagram showing exemplary regional divisions of the frequency bandwidth according to the first embodiment. In the example shown in Fig. 2, the frequency bandwidth is divided into three regions f1 to f3. Such regional divisions cause each of a plurality of radio channels to belong to one of the regions. In this example, it is assumed that the main region of group G1 is f1; the main region of group G2 is f2; and the main region of group G3 is f3.

It is assumed that each base station 11 has already stored information that represents the relationships between groups and main regions. In addition, it is assumed that each base station 11 has already stored information that represents the group to which the base station belongs and the main region of the own base station. Moreover, each base station 11 may mutually exchange and hold adjacent base station information that denotes which adjacent base station belongs to which group.

Mobile terminal 12 is connected to one of base stations 11 over a radio link and communicates through connected base station 11. At this point, mobile terminal 12 uses a channel allocated by base station 11.

Mobile terminal 12 that is present at an area where a plurality of cells overlaps receives signals from a plurality of base stations 11. Mobile terminal 12 is connected to one of base stations 11 from which mobile terminal 12 receives signals, transmits and receives a control signal to and from the connected base station, or/and makes communication for user data through base station 11. In this example, base station 11 to which mobile terminal 12 tries to be connected is referred to as a connected base station. On the other hand, base station 11 to which mobile terminal 12 do not try to be connected, but whose transmitted signal reaches mobile terminal 12 is referred to as an adjacent base station.

For example, mobile terminal 12_{A1} is present in cell c1, that base station 11₁ forms, and is connected to base station 11₁. In this case, the connected base station of mobile terminal 12_{A1} is base station 11₁.

In addition, mobile terminal 12_{A3} is present in an area where cell c1, that base station 11₁ forms, and cell c3, that base station 11₃ forms, overlap and is connected to base station 11₁. In this case, the connected base station of mobile terminal 12_{A3} is base station 11₁ and an adjacent base station thereof is base station 11₃.

Moreover, mobile terminal 12_{B2} is present in an area where cell c1 that base station 11₁ forms, cell c2 that base station 11₂ forms, and cell c3 that base station 11₃ forms overlap and is connected to base station 11₂. In this case, the connected base station of mobile terminal 12_{B2} is base station 11₂ and adjacent base stations thereof are base station 11₁ and base station 11₃.

Mobile terminal 12 measures a signal received from adjacent base station 11 and if mobile terminal 12 receives a signal from other than the connected base station, mobile terminal 12 determines that base station 11 is an adjacent base station and notifies the connected base station of adjacent status information that represents a group to which the cell of the adjacent base station belongs.

For example, since mobile terminal 12_{A3} that is connected to base station 11₁ also receives a signal of cell c3, mobile terminal 12_{A3} notifies base station 11₁, that is the connected base station, of group G3 to which base station 11₃, that is an adjacent base station, belongs as adjacent status information.

Not only when mobile terminal 12 starts communicating but also while it is communicating, mobile terminal 12 may periodically measure such a received signal and if an adjacent base station changes, mobile terminal 12 may notify the connected base station of new adjacent status information.

When mobile terminal 12 starts communicating, base station 11 connected thereto allocates a channel over the radio link to mobile terminal 12. At this point, base station 11 allocates a channel that belongs to a region other than the main region of the group represented by the adjacent status information concerning which mobile terminal 12 notifies base station 1.

For example, if mobile terminal 12 (for example, mobile terminal 12_{A3}) notifies base station 11₁ connected to mobile terminal 12 of adjacent status information that represents group G3, base station 11₁ allocates a channel of a region (region f2 or f3) other than the main region f3 of group G3 to mobile terminal 12.

If mobile terminal 12, that is communicating, notifies base station 11 of new adjacent status information, when the main region of the group represented by the adjacent status information has been allocated to mobile terminal 12, base station 11 notifies mobile terminal 12 that a channel allocation to the main region has been changed to another region.

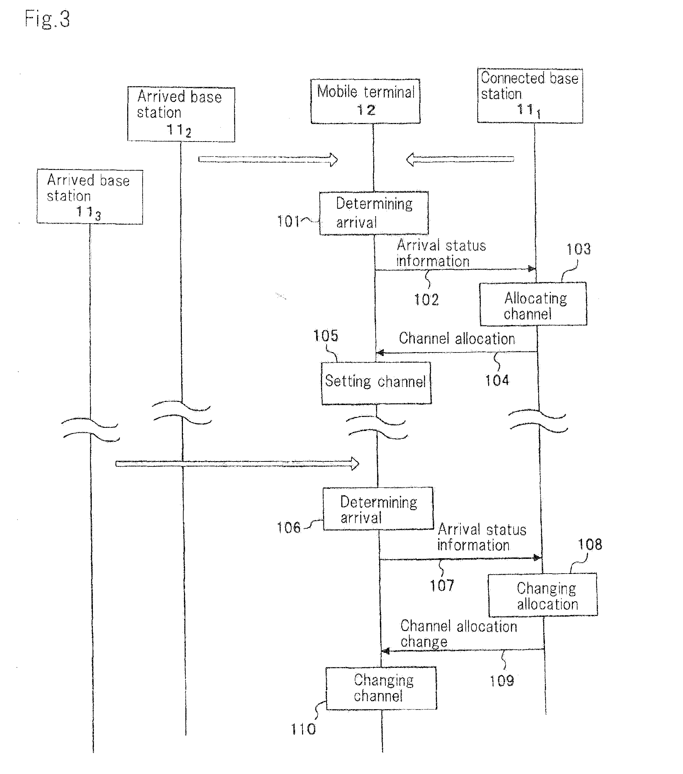

Fig. 3 is a sequence chart showing an operation of the radio communication system when allocating a channel according to the first embodiment. Referring to Fig. 3, in the initial state, besides a signal transmitted from connected base station 11₁, a signal transmitted from adjacent base station 11₂ arrives at mobile terminal 12. Mobile terminal 12 determines whether or not there is an adjacent base station (at step 101). Specifically, when mobile terminal 12 starts communicating, it measures the reception level of a signal transmitted from adjacent base station 11 and if the signal received from base station 11 other than connected base station 11₁ exceeds the threshold, mobile terminal 12 determines that base station 11 is an adjacent base station.

In this example, since adjacent base station 11₂ has been detected, mobile terminal 12 notifies connected base station 11₁ of adjacent status information that represents a group to which a cell that adjacent base station 11₂ forms belongs (at step 102).

When connected base station 11₁ receives the adjacent status information, it decides to allocate a channel selected from a region other than the main region of the group represented by the adjacent status information to the mobile terminal (at step 103). Then, connected base station 11₁ notifies mobile terminal 12 of a channel allocation command that allocates the channel (at step 104).

When mobile terminal receives the notification of the channel allocation, mobile terminal 12 sets the notified channel (at step 105) and starts communicating over the channel.

Although omitted in this example, for instance, mobile terminal 12 may transmit the foregoing adjacent status information to connected base station 111 along with a message that requests the start of communication. Alternatively, after connected base station 11₁ performs a required procedure such as authentication for mobile terminal 12 or the user, connected base station 11₁ may transmit a channel allocation to mobile terminal 12 along with a message that permits the start of communication.

Thereafter, it is assumed that as mobile terminal 12 moves, a signal transmitted from adjacent base station 11₃ arrives at mobile terminal 12. Mobile terminal 12 periodically determines whether or not a radio wave arrives at the mobile terminal (at step 106); when mobile terminal 12 detects a change of an adjacent base station, mobile terminal 12 notifies connected base station 11₁ of new adjacent status information (at step 107). In this example, since mobile terminal 12 can receive a signal transmitted from adjacent base station 11₃, mobile terminal 12 notifies connected base station 11₁ of adjacent status information that represents a group to which the cell of adjacent base station 11₃ belongs.

When connected base station 11₁ receives new adjacent status information, it checks for a channel allocated to mobile terminal 12 based on the adjacent status information and if necessary it changes a channel allocated thereto (at step 108). Specifically, if a channel of the main region of the group represented by the new adjacent status information has been allocated to mobile terminal 12, connected base station 11₁ decides to change the channel of the main region to a channel of another region.

When connected base station 11₁ decides to change the channel, it notifies mobile terminal 12 of the decision of the channel change and a channel of another region changed from the channel of the main region (at step 109). When mobile terminal 12 receives the notification of the channel change, it changes the channel for communication according to the notification (at step 110).

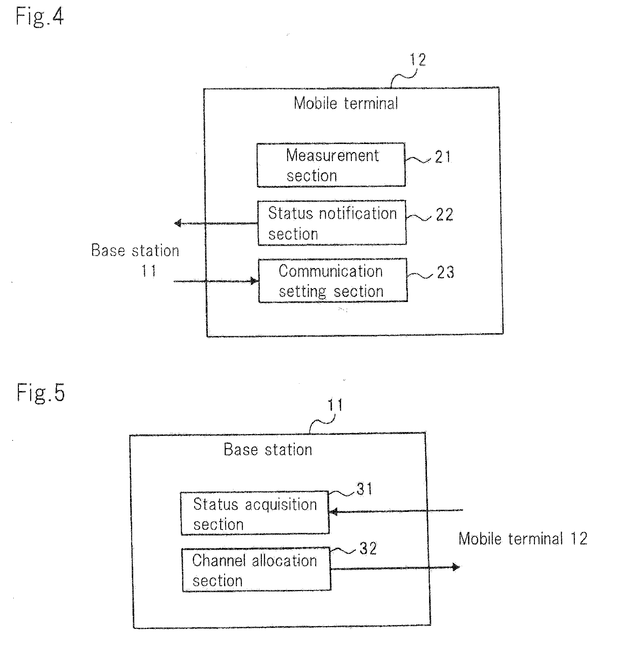

Fig. 4 is a block diagram showing a structure with respect to a channel allocation of mobile terminal 12 according to the first embodiment. Referring to Fig. 4, mobile terminal 12 has measurement section 21, status notification section 22, and communication setting section 23.

When measurement section 21 starts communicating or while it is communicating, it periodically measures the reception level of a signal received from peripheral base station 11.

Status notification section 22 determines whether or not it needs to notify connected base station 11 of adjacent status information based on the measured result by measurement section 21 and if necessary status notification section 22 notifies connected base station 11 of the adjacent status information. For example, if there is an adjacent base station when mobile terminal 12 starts communicating, status notification section 22 needs to notify connected base station 11 of the adjacent status information. In addition, if an adjacent base station changes while mobile terminal 12 is communicating, status notification section 22 needs to notify connected base station 11 of the adjacent status information.

Communication setting section 23 makes communication over a channel concerning which the connected base station notifies mobile terminal 12.

Fig. 5 is a block diagram showing a structure with respect to channel allocation of base station 11 that is a connected base station according to the first embodiment. Referring to Fig. 5, base station 11 has status acquisition section 31 and channel allocation section 32.

Status acquisition section 31 acquires adjacent status information concerning which mobile terminal 12 notifies the own base station connected thereto.

Channel allocation section 32 controls a channel allocation for mobile terminal 12 when it starts communicating or while it is communicating such that the group of the adjacent base station represented by adjacent status information acquired by status acquisition section 31 is not assigned to mobile terminal 12.

As described above, according to this embodiment, one of a plurality of regions into which channels are divided is designated as a main region for each of groups into which cells of a plurality of base stations are divided, a mobile terminal notifies a connected base station of a group to which a cell of an adjacent base station belongs, and the connected base station allocates a channel, that belongs to a region other than the main region of the group, to the mobile terminal. Thus, while the system bandwidth can be effectively used without the necessity of fully dividing it on the basis of each cell, interference can be effectively alleviated such that a channel on which interference likely takes place can be prevented from being allocated.

In the radio communication system according to this embodiment, the connected base station may preferentially allocate the main region of the group, to which the own cell belongs, to mobile terminal 12 that is connected to the connected base station. Thus, a channel on which interference likely takes place can be more securely prevented from being allocated than can be done by the radio communication system of this embodiment.

In addition, according to this embodiment, the main regions of all base stations 11 other than the connected base station at which a downlink signal arrives with a reception level exceeding a predetermined threshold are excluded from channels to be allocated. It should be noted, however, that the present invention is not limited to such a radio communication system. Alternatively, it may be determined whether or not an uplink signal transmitted from mobile terminal 12 arrives at base station 11 and it may be decided whether or not to exclude the main region of base station 11 from a channel to be allocated to mobile terminal 12 based on the determined result.

For example, the connected base station computes an interference amount that interferes with an adjacent base station based on a signal attenuation amount between mobile terminal 12 and the adjacent base station and the uplink transmission power value that is a power value of a signal transmitted from mobile terminal 12 and if the interference amount is equal to or lower than a predetermined threshold, a channel allocated to mobile terminal 12 may be decided without excluding a channel of the main region of the adjacent base station. Thus, since channels on which interference is less likely to take place are permitted to be allocated, the system bandwidth can be effectively used. The interference amount can be computed for example by multiplying the uplink transmission power value by the signal attenuation amount. Whether or not the interference amount is equal to or lower than the threshold may be determined by further computing a signal to noise ratio (S/N ratio) of the adjacent base station and by determining whether or not the acquired value is equal to or greater than a predetermined constant value.

As one specific example, mobile terminal 12 may measure the signal attenuation amount of a path between the own mobile terminal and adjacent base station 11 and notify the connected base station of the signal attenuation amount and the uplink transmission power value of the mobile terminal along with adjacent status information. Then, the connected base station may compute the interference amount that affects the adjacent base station based on the signal attenuation amount and uplink power value concerning which mobile terminal 12 notifies the connected base station, and if the interference amount is equal to or lower than the predetermined threshold, the connected base station may decide a channel to be allocated to mobile terminal 12 without excluding the channel of the main region of the adjacent base station.

As another specific example, mobile terminal 12 may cause adjacent status information to contain the downlink power value that is the power value of the signal received from the adjacent base station and notify the connected base station of the resultant adjacent status information. Then, the connected base station may have already stored the downlink transmission power value of the adjacent base station and compute the signal attenuation amount based on the downlink power value and the downlink reception power value concerning which mobile terminal 12 notifies the connected base station.

Further alternatively, as the uplink transmission power value, an uplink maximum transmission power value that is the maximum value of the signal that mobile terminal 12 transmits may be used. Processes in which mobile terminal 12 frequently notifies the connected base station of uplink transmission power values and in which the connected base station computes the interference amount based on the values can be reduced. In addition, since the uplink transmission power value of mobile terminal 12 is likely close to the uplink maximum transmission power value, it can be thought that the influence due to the difference between the uplink transmission power value and the uplink maximum transmission power is small.

### (Second embodiment)

An example in which the present invention is applied to WiMAX will be presented as a second embodiment.

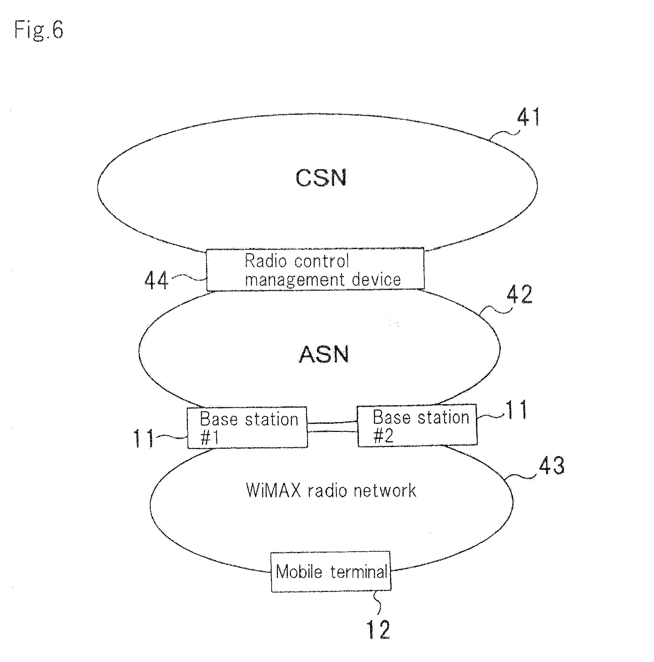

Fig. 6 is a schematic diagram showing a structure of a communication network including a WiMAX system. Referring to Fig 6, the communication network includes CSN (Connectivity Service Network) 41, ASN (Access Service Network) 42, and WiMAX radio network 43. The portion at which base station 11 and mobile terminal 12 are connected through WiMAX radio network 43 corresponds to the radio communication system according to the first embodiment. The basic structures and operations of base station 11 and mobile terminal 12 according to the second embodiment are the same as those according to the first embodiment.

Base station 11 of this embodiment is connected to radio control management device 44 in ASN 42. Radio control management device 44 is a device that controls WiMAX radio network 43 through a radio link and that functions as a gateway between CSN 41 and ASN 42 and is, for example, an ASN-GW (Gateway). Generally, in the CSN or ASN, individual devices are connected by an optical link or the like such as Ethernet (registered trademark) or WDM (Wavelength Division Multiplexing).

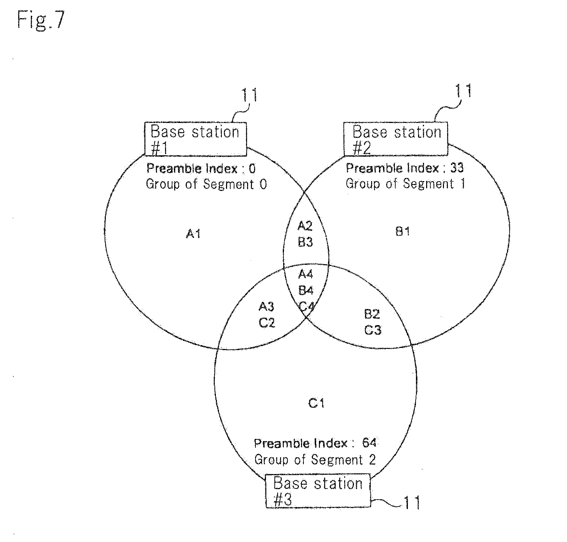

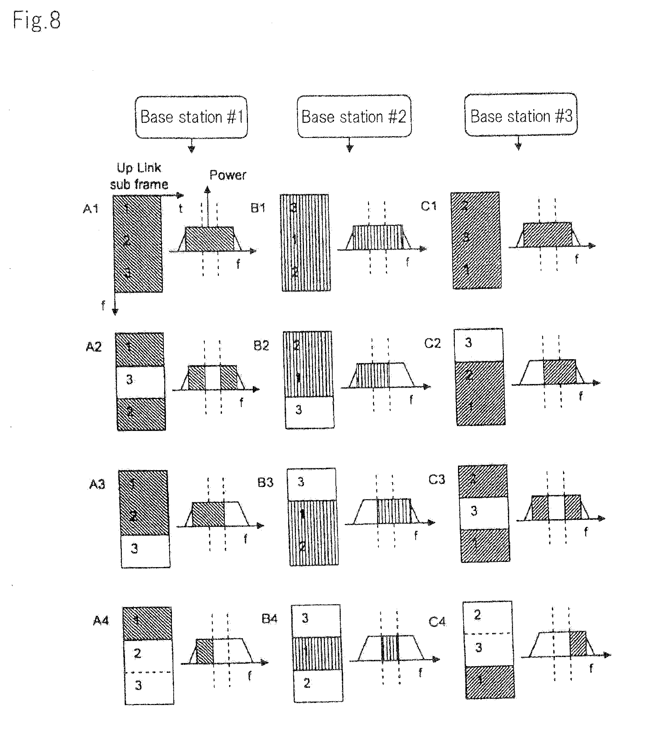

Fig. 7 is a schematic diagram showing an exemplary structure of the WiMAX system and locations of mobile terminals according to the second embodiment. Fig. 8 is a schematic diagram showing exemplary channel allocations for the mobile terminals shown in Fig. 7.

Cells of this WiMAX system are divided into three groups and the individual groups are respectively correlated with three segments (segments 0 to 2) defined in the specifications of WiMAX. In this example, it is assumed that the main region of the group of segment 0 is f1; the main region of the group of segment 1 is f2; and the main region of the group of segment 2 is f3.

In Fig. 7, it is assumed that the cell that base station #1 forms belongs to the group of segment 0 and the preamble index of base station #1 is, for example, 0. It is assumed that the cell that base station #2 forms belongs to the group of segment 1 and the preamble index of base station #2 is, for example, 33. It is assumed that the cell that base station #3 forms belongs to the group of segment 2 and the preamble index of base station #3 is, for example, 64.

In Fig. 7, A1 to A4, B1 to B4, and C1 to C4 represent the locations of mobile terminals. In addition, A1 to A4 are mobile terminals whose connected base station is base station #1; B1 to B4 are mobile terminals whose connected base station is base station #2; and C1 to C4 are mobile terminals whose connected base station is base station #3.

For example, mobile terminal A1 is present in the cell of base station #1 and is connected to base station #1. Mobile terminal A2 is present at a location where the cell of base station #1 and the cell of base station #2 overlap and is connected to base station #1. Thus, base station #2 is an adjacent base station of mobile terminal A2. On the other hand, mobile terminal A4 is present at a location where the cell of base station #1, the cell of base station #2, and the cell of base station #3 overlap and is connected to base station #1. Thus, base station #2 and base station #3 are adjacent base stations of mobile terminal A4.

When mobile terminal 12 of this embodiment starts communicating or while it is communicating, it notifies a connected base station of preamble indexes of adjacent base stations as adjacent status information. For example, mobile terminal A4 notifies base station #1, that is the connected base station, of preamble indexes of base station #2 and base station #3, that are adjacent base stations.

In addition, mobile terminal 12 causes adjacent status information to contain downlink reception power values that are power values of signals received from adjacent base stations and notifies a connected base station of the resultant adjacent status information.

The connected base station of this embodiment determines the main regions of the groups to which the adjacent base stations belong based on the preamble indexes concerning which the mobile terminal notifies the connected base station when the mobile terminal starts communicating or while it is communicating.

In addition, the connected base station has already stored downlink transmission power values of the adjacent base stations and computes signal attenuation amounts between mobile terminal 12 and adjacent base stations based on the downlink transmission power values and the downlink reception power value that mobile terminal 12 notifies the connected base station. In addition, the connected base station computes interference amounts that interfere with the adjacent base stations based on the signal attenuation amounts and an uplink transmission power value that is a power value of a signal transmitted from mobile terminal 12.

If the computed interference amounts exceed a predetermined threshold, the connected base station excludes the channels of the main regions of the adjacent base stations, if the interference amounts are equal to or lower than the threshold, the connected base station decides a channel to be allocated to the mobile terminal without excluding the channels of the main regions of the adjacent base stations.

For example, when mobile terminal A4 notifies base station #1 of adjacent status information, base station #1 determines the main regions of the groups to which the cells of the adjacent base stations belong. In this example, the groups to which the cells of the adjacent base stations belong are the group of segment 1 and the group of segment 2. In addition, as described above, the main region of the group of segment #1 is f2, whereas the main region of the group of segment 2 is f3. If the interference amounts against both adjacent base station #2 and adjacent base station #3 exceed the threshold and f1 that is the main region of the group of segment 0 can be used, the channel of region f1 is allocated to mobile terminal A4.

Referring to Fig. 8, channels allocated to mobile terminals A1 to A4, B1 to B4, and C to C4 are shown. Fig. 8 shows schematic diagrams of uplink sub frames illustrated using time axis and frequency axis for individual mobile terminals and graphs that represent transmission powers on frequency axis. Hatched portions in the schematic diagram and graphs represent regions that do not correspond to the main regions of the groups to which the adjacent base stations belong. White portions are regions corresponding to the main regions of the groups to which the adjacent base stations belong. Numerals (1 to 3) presented in the schematic diagrams represent the priority order of allocated channels.

A connected base station allocates a channel to a mobile terminal such that the main region of the group to which an adjacent base station belongs is excluded based on a preamble index represented by the adjacent status information, and the main region of the group to which the connected base station belongs has precedence.

The case in which base station #1 allocates a channel to mobile terminal A2 will be exemplified. The main region of an adjacent base station (base station #2) of mobile terminal A2 is region f2. The main region of base station #1 is region f1. Thus, base station #1 allocates a channel to mobile terminal A2 such that region f2 is excluded and region f1 has precedence. For example, if region f1 has a blank channel, the channel of region f1 is allocated to mobile terminal A2. If region f1 does not have a blank channel, the channel of region f2 is allocated to mobile terminal A2.

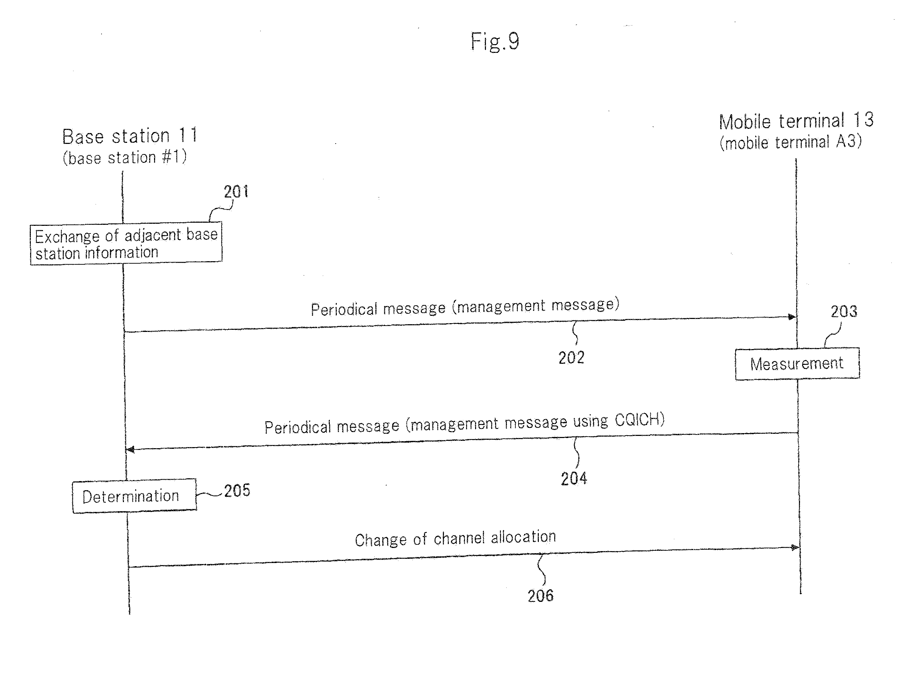

Fig. 9 is a sequence chart showing an exemplary operation when changing a channel according to the second embodiment. In this example, it is assumed that when mobile terminal 12 requests base station 11 for a channel allocation, it executes a channel allocation for an uplink frame by frame. In this example, the case in which base station #1 that is a connected base station of mobile terminal A3 changes a channel allocated to mobile terminal A3 will be exemplified.

Referring to Fig. 9, base station #1 has sheared adjacent base station information with adjacent base stations #2 and #3 (at step 201). For example, base stations #1 to #3 exchange adjacent base station information with each other directly or through radio control management device 44. This adjacent base station information contains identification ID, preamble index, and transmission power (Mobile_Neighbor_advertisement, etc) of each adjacent base station.

In addition, base station #1 notifies mobile terminal A3 of information about the base station and adjacent base stations as a periodical message (management message) (at step 202). The adjacent base stations are base stations that have been already located adjacent to base station #1. This message contains for example transmission power of the own base station (DL-MAP) and identification ID, preamble index, and transmission powder (Mobile_Neighbor_advertisement) of of each adjacent base station.

Mobile terminal A3 measures a reception power value of an actually received downlink signal and collates a base station that is receiving the downlink signal and an adjacent base station concerning which base station #1 notifies mobile terminal A3 (at step 203). In addition, mobile terminal A3 generates adjacent status information based on the measured and collated results and notifies base station #1 of the adjacent status information as a periodical message (management message) (at step 204). The adjacent status information notified here contains information about base station #3 as an adjacent base station of mobile terminal A3 and the reception level of a signal received from base station #3 and measured at mobile terminal A3.

Base station #1 computes a signal attenuation amount (path loss) between mobile terminal A3 and base station #3 based on the transmission power of base station #3 that has been already acquired as adjacent base station information and a reception level contained in the notified adjacent status information and determines whether or not to need to change the channel allocated to mobile terminal A3 (at step 205). If necessary, base station #1 commands mobile terminal A3 to change the channel for communication (at step 206).

In the forgoing, two embodiments of the present invention have been described. However, the present invention is not limited to such embodiments; instead, they may be used in combination or a part of which may be changed without departing from the scope of the art of the present invention.

Now, with reference to the embodiments, the present invention has been described. However, it should be understood by those skilled in the art that the structure and details of the present invention may be changed in various manners without departing from the scope of the present invention.

The present application claims priority based on Japanese Patent Application JP 2008-332983 filed on December 26, 2008, the entire contents of which are incorporated herein by reference in its entirety.

## Claims

1. A radio communication system having a plurality of base stations that respectively form cells over a radio link, and a mobile terminal that is connected to and communicates with said base stations through the radio link,
wherein one region of a plurality of regions into which channels are divided over the radio link is designated as a main region for each of groups into which the cells of said plurality of base stations are divided,
wherein when said mobile terminal receives a signal from a second base station other than a first base station to which the own mobile terminal is connected, said mobile terminal notifies said first base station of adjacent status information that represents a group to which a cell of the second base station belongs, and
wherein said first base station allocates a channel that belongs to a region other than the main region of the group represented by said adjacent status information concerning which said mobile terminal notifies said first base station.

2. The radio communication system as set forth in claim 1,
wherein said first base station preferentially allocates a main region of a group, to which a cell that the first base station forms belongs, to the mobile terminal connected to the first base station.

3. The radio communication system as set forth in claim 1 or 2,
wherein said first base station computes an interference amount that interferes with said second base station based on a signal attenuation amount between said mobile terminal and said second base station and a transmission power value of a signal transmitted from said mobile terminal and decides a channel allocated to said mobile terminal without excluding a channel of a main region of said second base station if the interference amount is equal to or lower than a predetermined threshold.

4. The radio communication system as set forth in claim 3,
wherein said mobile terminal causes said adjacent status information to contain a reception power value of a signal received from said second base station and notifies said first base station of the resultant adjacent status information, and
wherein said first base station has already stored a transmission power value of said second base station and computes said signal attenuation amount based on the transmission power value and said reception power value concerning which said mobile terminal informs said first base station.

5. The radio communication system as set forth in claim 3 or 4,
wherein said mobile terminal notifies said first base station of a transmission power value of the mobile terminal along with said adjacent status information, and
wherein said first base station uses said transmission power value concerning which said mobile terminal notifies said first base station to compute said interference amount.

6. The radio communication system as set forth in any one of claims 3 to 5,
wherein an uplink maximum transmission power value that is a maximum value of a signal that said mobile terminal transmits is used as the transmission power value of the signal transmitted from said mobile terminal.

7. The radio communication system as set forth in any one of claims 1 to 6,
wherein said radio communication system is WiMAX, said cells are divided into three groups, and the groups are respectively correlated with three segments of WiMAX,
wherein said mobile terminal notifies said first base station of a preamble index of said second base station as said adjacent status information, and
wherein said first base station determines the main region of the group to which said second base station belongs based on the preamble index concerning which said mobile terminal notifies said first base station and allocates a channel that belongs to a region other than the main region to the mobile terminal.

8. A base station device, comprising:
status acquisition means that acquires adjacent status information that represents a group to which a cell of a second base station other than a first base station of base stations that transmit signals that a mobile terminal receives belongs from the mobile terminal connected to the base station device, the first base station being connected to the mobile terminal; and
channel allocation means that determines a main region of a group represented by said adjacent status information acquired by said status acquisition means based on information concerning which one of a plurality of regions into which channels are divided over a radio link is correlated with a main region for each of a plurality of groups into which cells of a plurality of base stations are divided and allocates a channel that belongs to a region other than the main region to said mobile terminal.

9. The base station device as set forth in claim 8,
wherein said channel allocation means preferentially allocates a main region of a group, to which a cell that the base station device forms, to the mobile terminal connected to the own base station device.

10. The base station device as set forth in claim 8 or 9,
wherein said channel allocation means computes an interference amount that interferes with said second base station based on a signal attenuation amount between said mobile terminal and said second base station and a transmission power value of a signal transmitted from said mobile terminal and decides a channel allocated to said mobile terminal without excluding a channel of a main region of said second base station if the interference amount is equal to or lower than a predetermined threshold.

11. The base station device as set forth in claim 10,
wherein said mobile terminal causes said adjacent status information to contain a reception power value of the signal received from said second base station and notifies said status acquisition means of the resultant adjacent status information, and
wherein said channel allocation means has already stored a transmission power value of said second base station and computes said signal attenuation amount based on the transmission power value and said reception power value concerning which said mobile terminal informs said channel allocation means.

12. The base station device as set forth in claim 10 or 11,
wherein said mobile terminal notifies said status acquisition means of a transmission power value of the base station device along with said adjacent status information, and
wherein said channel allocation means uses said transmission power value concerning which said mobile terminal notifies said channel allocation means to compute said interference amount.

13. The base station device as set forth in any one of claims 10 to 12,
wherein an uplink maximum transmission power value that is a maximum value of a signal that said mobile terminal transmits is used as the transmission power value of the signal transmitted from said mobile terminal.

14. The base station device as set forth in any one of claims 8 to 13,
wherein said base station device is included in a WiMAX radio communication system,
wherein said cells are divided into three groups and the groups are respectively correlated with three segments of the WiMAX,
wherein said mobile terminal notifies said status acquisition means of a preamble index of said second base station as said adjacent status information, and
wherein said channel allocation means determines the main region of the group to which said second base station belongs based on the preamble index concerning which said mobile terminal notifies said channel allocation means and allocates a channel that belongs to a region other than the main region to the Mobile terminal.

15. A channel allocation method in a radio communication system having a plurality of base stations that respectively form cells over a radio link, and a mobile terminal that is connected to and communicates with said base stations through the radio link, comprising:
designating one region of a plurality of regions into which channels are divided over the radio link as a main region for each of groups into which the cells of said plurality of base stations are divided;
when said mobile terminal receives a signal from a second base station other than a first base station to which said mobile terminal is connected, causing said mobile terminal to notify said first base station of adjacent status information that represents a group to which a cell of the second base station belongs; and
causing said first base station to allocate a channel that belongs to a region other than the main region of the group represented by said adjacent status information received from said mobile terminal.
